# EUROPEAN PATENT SPECIFICATION

(11) **EP 3 496 547 B1**
(45) Date of publication and mention of the grant of the patent: **16.10.2019**
(21) Application number: 17751343.9
(22) Date of filing: 02.08.2017
(51) Int. Cl.: A23F 3/06

(54) **A PROCESS FOR MANUFACTURING A LEAF TEA PRODUCT**
VERFAHREN ZUR HERSTELLUNG EINES BLATTTEEPRODUKTS
PROCÉDÉ DE FABRICATION D'UN PRODUIT DE THÉ EN FEUILLES

(30) Priority: 15.08.2016 EP 16184171
(43) Date of publication of application: 19.06.2019
(73) Proprietor: Unilever PLC, London, Greater London EC4Y 0DY (GB); Unilever N.V., 3013 AL Rotterdam (NL)
(72) Inventor: GOVINDASWAMY, Vadivel, Bangalore 560 066 Karanataka (IN); GUTTAPADU, Sreeramulu, Bangalore 560 066 Karanataka (IN); SINGH, Gurmeet, Bangalore 560 066 Karanataka (IN)
(74) Representative: Warner, Guy Jonathan
(86) International application number: PCT/EP2017/069561
(87) International publication number: WO 2018/033394

(56) References cited:
- WO-A1-2005/067727
- WO-A1-2008/107296
- WO-A1-2014/206883

## Description

### Field of the invention

The present invention relates to leaf tea. More particularly it relates to post-auction processing of leaf tea.

### Background of the invention

Beverages based on the tea plant (*Camellia sinensis*) have been popular throughout the world for many hundreds of years. Tea beverages are traditionally made by infusing the dry leaves of the plant *Camellia sinensis* in boiling water.

Most of the tea consumed in the Western world is so-called black tea, which is obtained by harvesting leaves of the plant *Camellia sinensis* and withering, rolling, enzymatically oxidising (fermenting), firing and sorting them. Alternatively, the leaves can be processed without the fermentation step to produce what is known as green tea, which is widely consumed in parts of Asia. In another variation, oolong tea is prepared by partial fermentation.

When it is harvested, the tea crop has a high moisture content. To avoid deterioration of the crop during transportation, initial processing of the tea leaves must occur at or very close to the tea plantation. Thus, regardless of type, the properties of leaf tea are constrained to a certain degree by the location of production. Because of this geographical limitation, the crop processed by a given tea factory is usually limited in terms of choice of tea varieties, agronomy and the manufacturing process used, which in turn can have a marked effect on the properties (e.g. aroma, flavour, *etc*.) and hence the quality of the final product.

Leaf tea is usually sold at auction, with the highest quality teas commanding the highest prices. Indeed, there is a substantial price difference between high quality and low quality tea. Design and control of the manufacturing process is known to influence quality. This has prompted extensive research aimed at optimising manufacturing conditions so as to yield a product with the highest possible quality. However, the post-auction processing of tea has been much less extensively investigated.

The characteristics of the tea from a given tea garden are not constant, and will vary from season to season and according to conditions used to process the tea crop. This means that the range of teas available from auction are not always uniform. There is therefore an unmet need for post-auction processes which allow the properties of the final tea product to be tailored to the customer's requirements.

### Summary of the invention

Tea-based beverages are traditionally produced by infusing tea leaves in hot water and separating the infusion liquor from the spent tea material. Consumers in regions with a tradition of black tea consumption often have a preference for teas with a fast infusion rate and/or a strong liquor colour.

The present inventors have found that post-auction processing of black tea under certain thermal conditions yields a black leaf tea product which can deliver a darker/redder infusion liquor.

Thus the present invention relates to a process for manufacturing a black tea product, the process comprising the step of heating a black leaf tea starting material having a moisture content of less than 10 wt.% at a temperature of 170°C to 250°C for a duration of less than 60 seconds.

The end product of the process of this process is a black leaf tea product which has different properties to the starting material.

### Detailed description of the invention

For the purpose of the present invention, "tea" means material from *Camellia sinensis* var. *sinensis* and/or *Camellia sinensis* var. *assamica.* The term "leaf tea" refers to leaf and/or stem material from the tea plant in an uninfused form (i.e. material which has not been subjected to a solvent extraction step). Leaf tea is dried to a moisture content of less than 10 wt.%, and the moisture content of the leaf tea will not usually be below 0.1 wt.%. Typically the leaf tea has a moisture content of 1 to 5 wt.%. In other words, the term "leaf tea" refers to the end product of tea manufacture (sometimes referred to as "made tea").

"Fresh tea leaves" refers to tea leaves, buds and/or stem that have never been dried to a water content of less than 30 wt.%, und usually have a water content of 60 to 90 wt.%.

As used herein, the term "black tea" refers to substantially fermented tea, wherein "fermentation" refers to the oxidative and hydrolytic process that tea undergoes when certain endogenous enzymes and substrates are brought together. During the so-called fermentation process, colourless catechins in the leaves and/or stem are converted to a complex mixture of yellow/orange to dark brown polyphenolic substances. For example, black leaf tea can be manufactured from fresh tea material by the steps of: withering, maceration, fermentation and drying. A more detailed description of the production of black tea can be found in Chapter 14 of "Tea: Cultivation to consumption" (edited by K.C. Wilson & M.N. Clifford, published in 1992).

The starting material for the process of the present invention is black leaf tea. Black leaf tea is a readily available commercial product which can be purchased in bulk at tea auctions. In other words, the term "black leaf tea" refers to the end product of black tea manufacture (sometimes referred to as "made tea"). The black leaf tea provided as the starting material for the claimed process has a moisture content of less than 10 wt.%, preferably less than 6 wt.%, more preferably less than 5 wt.%. The moisture content of this black leaf tea is usually at least 0.1 wt.%, more usually at least 0.5 wt.%. Typically the black leaf tea will have a moisture content of 1 to 5 wt.%.

The black leaf tea starting material is preferably prepared by way of a process comprising an anaerobic withering step. Leaf tea processed in this manner tends to deliver a higher level of polyphenols into the infusion liquor on brewing, and may additionally or alternatively deliver a darker and/or redder infusion liquor. Unfortunately, the increased polyphenol delivery can have an impact on the flavour of the brewed beverage, which may have e.g. higher bitterness and/or astringency. The present inventors have found that the process of the present invention can improve the sensorial properties of the infusion liquor obtained on brewing this type of leaf tea.

A suitable process comprising an anaerobic withering step is disclosed in WO 2013/075912. Briefly, an appropriate process comprises the sequential steps of: incubating fresh leaf tea (i.e. tea leaves, buds, and/or stem that have never been dried to a moisture content of less than 30% by weight, and typically have moisture content of 60 to 90% by weight) under anaerobic conditions for 4 to 36 hours at a temperature of 4°C to 60°C; subjecting the incubated leaf to comminution; fermenting the comminuted leaf tea (preferably for 15 minutes to 3 hours at a temperature of 15°C to 35°C); and drying the fermented leaf tea (preferably to a moisture content of less than 10 wt.%, more preferably to a moisture content of less than 5 wt.%) to obtain black leaf tea. As used herein the term "anaerobic conditions" means that the gas phase in contact with the leaf tea has an oxygen content of less than 3% by volume (preferably less than 2%, more preferably less than 1%). It is particularly preferred that the gas phase in contact with the leaf is substantially free of oxygen. For example, suitable anaerobic conditions can be achieved by placing the fresh leaf tea in a container, optionally purging oxygen from the container by passing a gas with an oxygen content of less than 3% by volume through the container (e.g. nitrogen or carbon dioxide), and then closing the container. Additionally or alternatively, suitable anaerobic conditions may be achieved by placing the leaf in an airtight chamber under vacuum.

The end product of the process of the present invention is a black leaf tea product. This black leaf tea product is manufactured by subjecting the black leaf tea starting material to certain thermal conditions by way of a heat treatment step. Processing the black leaf tea in this way produces a black leaf tea product which has different properties to the starting material.

The present inventors have found that a short heat treatment step at a high temperature can change the properties of the black leaf tea starting material. As such, the process of the present invention comprises a heat treatment step that is carried out at a temperature of 170°C to 250°C for a duration of less than 60 seconds.

The temperature of the heat treatment step needs to be sufficient to produce a black leaf tea product which has different properties to the starting material. Without wishing to be bound by theory, the inventors believe that temperatures below a certain threshold do not elicit appropriate changes in the starting material. Therefore the black leaf tea starting material is heated to a temperature of at least 170°C, preferably at least 180°C, more preferably at least 190°C, and most preferably at least 195°C.

Very high temperatures are thought to increase the risk of over-drying of the black leaf tea starting material. Therefore, the black leaf tea starting material is heated to a temperature which does not exceed 250°C. Preferably the temperature does not exceed 220°C, more preferably the temperature does not exceed 210°C, and most preferably the temperature does not exceed 205°C.

If the black leaf tea starting material is heated to a high temperature for an extended period of time, then this can impair the sensorial properties of the final leaf tea product. In particular, prolonged heating times are associated with smoky and/or burnt flavour notes. A smoky flavour is characteristic of certain types of black tea (e.g. lapsang souchong), and this flavour direction may thus be of interest from a consumer point of view. However, burnt flavour notes are undesirable. Therefore the duration of the heat treatment step is less than 60 seconds. The duration of the heat treatment step is preferably no longer than 45 seconds, more preferably no longer than 30 seconds, and most preferably no longer than 25 seconds.

At high incubation temperatures, even very short heating times can elicit changes in the black leaf tea starting material. Nevertheless, in order to achieve process consistency and/or reproducibility it is preferred that extremely brief heating times are avoided. Thus the duration of the heat treatment step is preferably at least 5 seconds, more preferably at least 10 seconds, and most preferably at least 15 seconds.

Since the process of the present invention is a post-auction process, it is does not need to be carried out in the proximity of a tea plantation. Indeed, whilst the starting material for the process is likely to be a black leaf tea product from a single tea garden, the process is not limited in this way. Thus a further advantage of the process is that the starting material can be a tea blend (i.e. the black leaf tea having a moisture content of less than 10 wt.% can be a tea blend).

As used herein, the term "tea blend" refers to a mixture of two or more different black leaf teas. In the tea industry, the final packaged tea product sold to the consumer is commonly produced by blending different leaf teas together. Leaf teas for a blend are typically selected according to a number of different attributes, e.g. their quality, flavour, strength, body, size of leaf and price. Tea blending is a post-auction process, and allows teas of different origins to be combined to meet consumer preferences.

Additionally or alternatively, the black leaf tea product obtainable by the process of the present invention can be used as a component of a tea blend. In other words, the black leaf tea product is preferably blended with one or more black leaf tea. It is envisaged that the tea blend may comprise both the black leaf tea starting material and the black leaf tea product.

The present inventors have found that the black leaf tea product obtainable by the process has different attributes to the black leaf tea starting material, particularly regarding the properties of the infusion liquor produced on brewing.

As used herein the term "comprising" encompasses the terms "consisting essentially of" and "consisting of". All percentages and ratios contained herein are calculated by weight unless otherwise indicated. It should be noted that in specifying any range of values or amounts, any particular upper value or amount can be associated with any particular lower value or amount. Except in the operative and comparative examples, all numbers in the description indicating amounts of materials, conditions of reaction, physical properties of materials, and/or use are to be understood as being preceded by the word "about". The various features of the embodiments of the present invention referred to in individual sections above apply, as appropriate, to other sections *mutatis mutandis.* Consequently features specified in one section may be combined with features specified in other sections as appropriate. The disclosure of the invention as found herein is to be considered to cover all embodiments as found in the claims as being multiply dependent upon each other. Unless defined otherwise, all technical and scientific terms used herein have the same meaning as commonly understood by one of ordinary skill in the art in the field of tea processing.

The present invention will now be illustrated by reference to the following non-limiting examples.

### Examples

### Example 1

A black leaf tea was prepared using leaf tea from a South Indian tea plantation according to standard manufacturing conditions. Briefly, the fresh tea leaves were withered for 18 hours, macerated by CTC, fermented for 90 minutes, and dried to obtain the black leaf tea. Portions of this black leaf tea starting material were subjected to a heat treatment step by placing the tea in a hot oven (HTA Instrumentation Pvt. Ltd., Bangalore) at 200°C for the durations indicated in Table 1. A portion of the starting material was set aside for use as a control sample (Control A); this portion was not subjected to any kind of thermal treatment.

Infusions were prepared from each of the thermally treated samples and the control sample. Each infusion was made by infusing 2 g of leaf tea in 200 ml of freshly boiled water for 2 minutes without stirring. The L*a*b* values of the resulting infusions were determined using colourimetry (Hunter LAB colourimeter, UltraScan VIS1437).

Samples 1 to 4 were produced by keeping the temperature constant (200°C) and varying the duration of the heat treatment step. The data in Table 1 shows the results of the colour analysis using the CIE L*a*b* colour space for infusions resulting from brewing these samples according to the brewing protocol set out above.

**Table 1**

| **Sample** | **Temperature** | **Duration** | **Infusion** | | |
|---|---|---|---|---|---|
| | **(°C)** | **(sec)** | **L*** | **a*** | **b*** |
| **Control A** | - | - | 73.19 | 16.29 | 76.34 |
| **1** | 200 | 10 | 72.68 | 16.59 | 72.80 |
| **2** | 200 | 20 | 70.68 | 18.31 | 73.39 |
| **3** | 200 | 30 | 70.19 | 18.99 | 71.59 |
| **4** | 200 | 45 | 68.86 | 18.98 | 69.47 |

The coordinates L* and a* are of particular interest, since these values relate to the darkness and redness of the infusion liquor. Consumers in regions with a tradition of black tea consumption often have a preference for teas with a strong liquor colour. Lower L* values indicate a darker infusion liquor (whilst higher L* values indicate a lighter/paler infusion liquor). Higher a* values indicate a redder colour (whilst lower a* values indicate a greener colour). Thus, infusions with higher a* values and a lower L* values are of particular interest.

The data in Table 1 shows that there is a trend for both the darkness (L* value) and the redness of the infusion liquor (a* value) to increase as the duration of the heat treatment step increases. Increased duration of heat treatment is also associated with the introduction of smoky (and ultimately burnt) flavour notes. A smoky flavour direction may be desirable, since this type of flavour is characteristic of certain types of black tea (e.g. lapsang souchong). However, burnt flavour notes are undesirable from a consumer point of view.

The samples prepared above (i.e. samples 1 to 4 and the control sample) were analysed to determine the content of certain tea compounds. In particular, the levels of epicatechin (EC), epicatechin gallate (ECG), epigallocatechin gallate (EGCG), gallic acid (GA), and caffeine were measured.

The samples for analysis were prepared using the standard ISO method (ISO 14502-1) and the amount of catechins in these samples was determined according to the standard ISO method (ISO 14502-2). The results are presented in Table 2.

**Table 2**

| **Tea compound (mg/g)** | **Sample** | | | | |
|---|---|---|---|---|---|
| | **Control** | **1** | **2** | **3** | **4** |
| EC | 6.0 | 5.9 | 4.7 | 3.5 | 2.7 |
| ECG | 2.2 | 2.3 | 2.1 | 2.0 | 1.8 |
| EGCG | 4.2 | 3.9 | 3.5 | 3.4 | 3.2 |
| Gallic acid | 2.4 | 2.6 | 3.2 | 3.9 | 4.5 |
| Caffeine | 34.6 | 33.9 | 32.8 | 32.9 | 32.2 |

The data in Table 2 shows that the levels of catechins and caffeine tend to decrease as the duration of the heat treatment step increases. In contrast, the level of gallic acid tends to increase.

Caffeine and catechins are known to have a bitter taste. A reduction in the level of such molecules is expected to reduce the bitterness of the tea liquor. Thus the process of the present invention can increase the infusion performance of leaf tea, whilst simultaneously delivering an infusion which does not suffer from the drawback of increased bitterness.

### Example 2

A black leaf tea was prepared using leaf tea from a South Indian tea plantation according to standard manufacturing conditions. Briefly, the fresh tea leaves were withered for 18 hours, macerated by CTC, fermented for 90 minutes, and dried to obtain the black leaf tea. A portion of this material was subjected to a heat treatment step by placing the tea in a hot oven (HTA Instrumentation Pvt. Ltd., Bangalore) at 200°C for 20 seconds (Sample 5). A portion of the starting material was set aside for use as a control sample (Control B). The control sample was not subjected to any kind of thermal treatment.

A black leaf tea prepared by a process comprising an anaerobic treatment step was used as an alternative starting material. Briefly, fresh tea leaves from a South Indian tea plantation were incubated in an air-tight environment for 24 hours (18 to 30 kg of leaves sealed in 50 L food-grade HDPE drums), then , macerated by CTC, fermented for 90 minutes, and dried to obtain the black leaf tea. A portion of this material was subjected to a heat treatment step by placing the tea in a hot oven (HTA Instrumentation Pvt. Ltd., Bangalore) at 200°C for 20 seconds (Sample 6), and a portion of this material was set aside for use as a control sample (Control C). The control sample was not subjected to any kind of thermal treatment.

Infusions were prepared from each of the thermally treated samples and the control samples. Each infusion was made by infusing 2 g of leaf tea in 200 ml of freshly boiled water for 2 minutes without stirring. The L*a*b* values of the resulting infusions were determined in the same manner described in Example 1. The data in Table 3 shows the results of the colour analysis using the CIE L*a*b* colour space for these samples.

**Table 3**

| **Sample** | **Anaerobic withering?** | **Temperature** | **Duration** | **Infusion** | | | |
|---|---|---|---|---|---|---|---|
| | | **(°C)** | **(sec)** | **L*** | **a*** | **b*** | **Haze** |
| **Control B** | No | - | - | 82.07 | 6.29 | 69.03 | 5.00 |
| **5** | No | 200 | 20 | 80.21 | 7.89 | 68.10 | 4.30 |
| **Control C** | Yes | - | - | 77.05 | 12.51 | 83.73 | 12.83 |
| **6** | Yes | 200 | 20 | 73.44 | 18.67 | 78.28 | 9.83 |

Once again, the coordinates L* (darkness) and a* (redness) are of particular interest.

The data in Table 3 shows that thermal treatment increases both the darkness (lower L* value) and the redness (higher a* value) of the infusion liquor compared to the relevant control sample. Furthermore, thermal treatment seems to reduce the haze value of the infusion liquor. The data indicate that sample 6 had the darkest/reddest liquor of these samples.

Sensory assessment of the infusions was carried out. Once again, infusions were made by brewing 2 g of leaf tea in 200 ml of freshly boiled water. Sensory scores were obtained by serving 20 ml portions of the infusions to pre-trained sensory panellists (14 member panel) for assessment. The average sensory scores on a scale of 1 to 10 for different visual and in-mouth sensory attributes are presented in Table 4.

**Table 4**

| **Sensory property** | **Sample** | | | |
|---|---|---|---|---|
| | **Control B** | **5** | **Control C** | **6** |
| Redness | 6.20 | 6.41 | 6.54 | 6.99 |
| Darkness | 5.83 | 6.10 | 6.27 | 6.90 |
| Bitterness | 4.92 | 2.72 | 6.86 | 5.36 |
| Astringency | 4.65 | 4.71 | 5.82 | 5.83 |

The data show that Control C (anaerobic withering) is perceived as being more bitter/astringent than Control B (standard black tea). Thus, although leaf tea manufactured via a process comprising anaerobic withering produces an infusion liquor which is judged to be darker/redder than standard leaf tea, this effect is accompanied by a change in the flavour attributes which are not necessarily preferred by consumers. Thermal processing according to the present invention can mitigate the impact that anaerobic withering has on the flavour of the infusion whilst still improving the appearance of the liquor in terms of darkness/redness.

## Claims

1. A process for manufacturing a black tea product, the process comprising the step of heating a black leaf tea starting material having a moisture content of less than 10 wt.% at a temperature of 170°C to 250°C for a duration of less than 60 seconds.

2. A process as claimed in claim 1 wherein the moisture content of the black leaf tea starting material is less than 5 wt.%.

3. A process as claimed in claim 1 or claim 2 wherein the temperature is from 180°C to 220°C.

4. A process as claimed in claim 3 wherein the temperature is from 190°C to 210°C.

5. A process as claimed in any one of claims 1 to 4 wherein the black leaf tea starting material is heated for a duration of 5 to 45 seconds.

6. A process as claimed in claim 5 wherein the black leaf tea starting material is heated for a duration of 10 to 30 seconds.

7. A process as claimed in claim 6 wherein the black leaf tea starting material is heated for a duration of 15 to 25 seconds.

8. A process as claimed in any one of claims 1 to 7 wherein the black leaf tea starting material is manufactured by a process comprising the step of incubating fresh tea leaves at a temperature of 4°C to 60°C under anaerobic conditions for 4 to 36 hours.

9. A process as claimed in claim 8 wherein the anaerobic conditions are achieved by placing the fresh tea leaf in a container, optionally purging oxygen from the container by passing a gas with an oxygen content of less than 3% by volume through the container, and then closing the container.

## Patentansprüche

1. Verfahren zur Herstellung eines Schwarzteeproduktes, wobei das Verfahren den Schritt des Erhitzens eines Schwarzblatttee-Ausgangsmaterials mit einem Feuchtigkeitsgehalt von weniger als 10 Gew.-% bei einer Temperatur von 170°C bis 250°C während einer Dauer von weniger als 60 Sekunden umfasst.

2. Verfahren, wie im Anspruch 1 beansprucht, wobei der Feuchtigkeitsgehalt des Schwarzblatttee-Ausgangsmaterials weniger als 5 Gew.-% beträgt.

3. Verfahren, wie im Anspruch 1 oder Anspruch 2 beansprucht, wobei die Temperatur von 180°C bis 220°C beträgt.

4. Verfahren, wie im Anspruch 3 beansprucht, wobei die Temperatur von 190°C bis 210°C beträgt.

5. Verfahren, wie in irgendeinem der Ansprüche 1 bis 4 beansprucht, wobei das Schwarzblatttee-Ausgangsmaterial für eine Dauer von 5 bis 45 Sekunden erhitzt wird.

6. Verfahren, wie im Anspruch 5 beansprucht, wobei das Schwarzblatttee-Ausgangsmaterial für eine Dauer von 10 bis 30 Sekunden erhitzt wird.

7. Verfahren, wie im Anspruch 6 beansprucht, wobei das Schwarzblatttee-Ausgangsmaterial für eine Dauer von 15 bis 25 Sekunden erhitzt wird.

8. Verfahren, wie in irgendeinem der Ansprüche 1 bis 7 beansprucht, wobei das Schwarzblatttee-Ausgangsmaterial durch ein Verfahren hergestellt wird, das den Schritt des Inkubierens frischer Teeblätter unter anaeroben Bedingungen bei einer Temperatur von 4°C bis 60°C für 4 bis 36 Stunden umfasst.

9. Verfahren, wie im Anspruch 8 beansprucht, wobei die anaeroben Bedingungen erreicht werden, indem das frische Teeblatt in einen Behälter gegeben wird, gegebenenfalls mit Ausspülen von Sauerstoff aus dem Behälter, indem ein Gas mit einem Sauerstoffgehalt von weniger als 3 Volumen-% durch den Behälter geleitet wird und dann Schließen des Behälters.

## Revendications

1. Procédé de fabrication d'un produit de thé noir, le procédé comprenant l'étape de chauffage d'une matière première de thé noir en feuille présentant une teneur en humidité inférieure à 10 % en masse à une température de 170°C à 250°C sur une durée inférieure à 60 secondes.

2. Procédé selon la revendication 1, dans lequel la teneur en humidité de la matière première de thé noir en feuille est inférieure à 5 % en masse.

3. Procédé selon la revendication 1 ou la revendication 2, dans lequel la température est de 180°C à 220°C.

4. Procédé selon la revendication 3, dans lequel la température est de 190°C à 210°C.

5. Procédé selon l'une quelconque des revendications 1 à 4, dans lequel la matière première de thé noir en feuille est chauffée sur une durée de 5 à 45 secondes.

6. Procédé selon la revendication 5, dans lequel la matière première de thé noir en feuille est chauffée sur une durée de 10 à 30 secondes.

7. Procédé selon la revendication 6, dans lequel la matière première de thé noir en feuille est chauffée sur une durée de 15 à 25 secondes.

8. Procédé selon l'une quelconque des revendications 1 à 7, dans lequel la matière première de thé noir en feuille est fabriquée par un procédé comprenant l'étape d'incubation de feuilles de thé fraîches à une température de 4°C à 60°C dans des conditions anaérobies pendant de 4 à 36 heures.

9. Procédé selon la revendication 8, dans lequel les conditions anaérobies sont réalisées en plaçant la feuille de thé fraîche dans un récipient, en purgeant éventuellement l'oxygène du récipient en faisant passer un gaz avec une teneur en oxygène inférieure à 3 % en volume à travers le récipient, et en fermant ensuite le récipient.
